# EUROPÄISCHE PATENTSCHRIFT

(11) **EP 3 285 986 B1**
(45) Veröffentlichungstag und Bekanntmachung des Hinweises auf die Patenterteilung: **22.07.2020**
(21) Anmeldenummer: 16718337.5
(22) Anmeldetag: 22.04.2016
(51) Int. Cl.: B29C 63/00, B32B 37/15

(54) **VERFAHREN ZUR HERSTELLUNG EINES DEKORATIVEN PROFILKÖRPERS, INSBESONDERE EINER KANTENLEISTE**
METHOD FOR PRODUCING A DECORATIVE PROFILED ELEMENT, PARTICULARLY AN EDGE STRIP
PROCÉDÉ DE FABRICATION D'UN CORPS PROFILÉ DÉCORATIF, NOTAMMENT D'UNE BAGUETTE DE LISIÈRE

(30) Priorität: 23.04.2015 DE 102015106241
(43) Veröffentlichungstag der Anmeldung: 28.02.2018
(60) Teilanmeldung: 20178078.0
(73) Patentinhaber: SURTECO GmbH, 86647 Buttenwiesen (DE)
(72) Erfinder: OTTOW, Martin, 45134 Essen (DE); SCHUNCK, Stephan, 48151 Münster (DE); PETRAKIS, Jordanis, 42277 Wuppertal (DE); MENKE, Oliver, 44879 Bochum (DE); DOHE, Dieter, 49525 Lengerich (DE); GORNIK, Christian, 2491 Neufeld (AT); PFEIFER, Gerald, 7083 Purbach am Neusiedlersee (AT)
(74) Vertreter: von dem Borne, Andreas
(86) Internationale Anmeldenummer: PCT/EP2016/059015
(87) Internationale Veröffentlichungsnummer: WO 2016/170117

(56) Entgegenhaltungen:
- EP-A1- 1 163 864
- DE-A1-102011 015 898
- DE-A1-102011 104 980
- DE-U1-202007 011 911

## Beschreibung

Die Erfindung betrifft ein Verfahren zur Herstellung eines dekorativen Profilkörpers und einen solchen Profilkörper sowie eine bedruckbare Folie für die Herstellung eines Profilkörpers.

Bei einem dekorativen Profilkörper kann es sich bevorzugt um eine Kantenleiste für die Schmalflächenbeschichtung einer Möbelplatte handeln. Eine solche Kantenleiste wird auch als Kantenband oder auch einfach nur als Kante bzw. Möbelkante bezeichnet. Sie besteht bevorzugt aus thermoplastischem Kunststoff, und wird z. B. im Wege der Extrusion hergestellt. Die Erfindung umfasst aber grundsätzlich auch die Herstellung anderer Profilkörper bzw. Formteile aus unterschiedlichen Werkstoffgruppen wie z. B. Kunststoff, Holzwerkstoffen, Metallen oder Verbundstoffen, und zwar als Endlosware oder auch als Stückgut.

Bei der Herstellung solcher dekorativer Profilkörper und insbesondere Kantenleisten besteht grundsätzlich das Bedürfnis, diese mit einem bestimmten Dekor zur Verfügung zu stellen. Dabei ist es bekannt, den Profilkörper, z. B. die Kantenleiste, zu bedrucken, z. B. im Wege des analogen Drucks oder auch des Digitaldrucks.

Alternativ ist es jedoch bekannt, Profilkörper, bzw. Kantenleisten mit dekorativen Folien zu beschichten, wobei es sich insbesondere um bedruckte Folien handelt. Solche Folien können z. B. aus Kunststoff aber auch aus Papier, Metall, Cellulose usw. oder entsprechenden Werkstoffkombinationen bestehen. Üblich sind dabei Folien mit einem Mehrschichtaufbau, der basierend auf dem eigentlichen Folienwerkstoff noch weitere Schichten aufweist. Solche zusätzlichen Schichten sind Lack- oder Druckschichten oder Metallschichten sowie Primer- bzw. Haftvermittlerschichten, weitere Trägerwerkstoffe (Verbundmaterialien) und insbesondere Klebstoff- oder Heißsiegellackschichten. Die zuletzt genannten Klebstoff- oder Heißsiegellackschichten dienen der Verarbeitung der Folie und insbesondere der Verbindung der Folie mit einem Substrat unter Bildung des dekorativen Profilkörpers.

Alternativ werden in der Praxis auch Transferfolien eingesetzt, bei denen eine Polymerfolie als Träger ("carrier") für die auf das Substrat zu übertragende Beschichtung dient. Bei der Beschichtung handelt es sich z. B. um einen Lack, eine Metallschicht usw. Als äußerste Schicht ist entweder eine Klebstoffschicht oder ein Heißsiegellack aufgebracht, der bei der Applikation mittels Wärme den Verbund zum Formteil bzw. Profilkörper herstellt. Bei Transferfolien dient die Folie nur als Träger der aufzubringenden Beschichtung und wird nach der Applikation wieder vom Formteil unter Ablösung von der auf das Formteil übertragenden Beschichtung entfernt. Die Trägerfolie verbleibt also nicht auf dem Formteil.

Stets erfolgt die Applikation der bekannten Folien entweder durch Heißsiegeln oder mittels Klebstoff. Aus diesem Grund bestehen die bekannten Folien (Heißsiegelfolien sowie Transferfolien) aus einer temperaturbeständigen Basisfolie, z. B. PET, einer Dekorbeschichtung mit mittlerer Temperaturbeständigkeit und einer Schmelz- bzw. Siegelbeschichtung aus einem niedrig schmelzenden Polymer oder einem Primer. Diese Schmelz- bzw. Siegelbeschichtung dient dem Siegelverbund zum Untergrund. Die einzelnen Schichten bzw. Funktionalsegmente sind teilweise über Primer oder mittels physikalischer Vorbehandlung miteinander verbunden. Dabei kann statt einer Schmelzschicht (z. B. aus EVA-, PA-Hotmelt) zur Vermeidung bzw. Reduzierung der erforderlichen Wärmeinbringung bei der Applikation eine Verklebung mit Einkomponenten- oder Zweikomponentenklebstoffen bzw. mit niedrig schmelzenden Hot Meltklebern eingesetzt werden.

Nachteilig bei den bekannten Technologien sind unter anderem Schwankungen in den Folienqualitäten hinsichtlich der Haftungseigenschaften und der Oberflächenqualität sowie in dem Verhalten im Applikationsprozess. So besteht die Gefahr der Delamination der applizierten Folie vom Substrat bei mechanischer, thermischer oder chemischer Belastung oder Bearbeitung des Profilkörpers. Dieses Problem stellt sich z. B. bei der spanabhebenden Bearbeitung von Kantenbändern, denn solche Kantenbänder werden in der Regel mit Übermaß an der Schmalfläche des Möbelteils befestigt und anschließend durch spanabhebende Bearbeitung an die erforderliche Geometrie angepasst. Dabei kann es in der Praxis zur Delamination und damit zur Beschädigung des dekorativen Profilkörpers kommen.

Im Übrigen ist in der Regel die Auswahl an Foliendekoren und an Folienprägungen beschränkt. Die Prozessführung erfordert häufig auch sehr enge Verfahrensparameter. Hinzukommen eventuelle Bimetalleffekte durch die applizierten Folien bei dünnen Substratschichten. Die Verarbeitung kann zudem unwirtschaftlich sein, wenn hohe Materialverluste durch erforderliche Überstände bei der Folienverarbeitung auftreten. Schließlich unterliegen die bekannten Folien Recyclingeinschränkungen wegen des Mehrstoffaufbaus im Sinne eines Verbundsystems.

Dennoch besteht das Bedürfnis, bedruckte Folien zu dekorativen Zwecken auf geeignete Substrate unter Bildung dekorativer Profilkörper, z. B. Möbelkanten, aufzubringen.

Im Übrigen wird in der DE 10 2011 104 980 A1 eine Kantenleiste aus thermoplastischem Kunststoffmaterial in mehrschichtiger Struktur beschrieben, wobei diese über eine im Schmelzzustand hochfließfähige Schmelzschicht verfügt, die eine vergleichbare Härte und Schmelztemperatur zumindest einer weiteren Schicht besitzt. Dieses Dokument befasst sich vor allem mit der Ausgestaltung dieser hochfließfähigen Schmelzschicht, die für eine optimale Absorption von Laserstrahlung oder Plasmaenergie ausgebildet sein soll. Die sichtbare Oberseite der eingefärbten Kantenleiste kann geprägt und/oder bedruckt und/oder lackiert und/oder mit einer Kunststofffolie bzw. Metallfolie laminiert sein. Dabei können zwei- oder mehrschichtige Kantenleisten durch Coextrusion gefertigt werden. Möglich ist auch eine Laminierung der Schmelzschicht in einem zweistufigen Prozess. Im ersten Fertigungsschritt wird die Schmelzschicht als Folie extrudiert. Anschließend erfolgt die Laminierung dieser Folie auf die Rückseite der Kantenleiste.

Der Erfindung liegt die Aufgabe zugrunde, ein Verfahren zu schaffen, mit dem sich dekorative Profilkörper, insbesondere Kantenleisten für die Möbelindustrie, unter Verwendung bedruckter Folien auf wirtschaftliche Weise mit hoher Qualität herstellen lassen.

Zur Lösung dieser Aufgabe lehrt die Erfindung ein Verfahren zur Herstellung eines dekorativen Profilkörpers, insbesondere einer Kantenleiste für die Schmalflächenbeschichtung von Möbelplatten, mit den Merkmalen des Anspruches 1. Dabei wird eine Folie aus einem thermoplastischen Kunststoff hergestellt,
wobei die Folie mit einem Dekor bedruckt wird und/oder bedruckt ist
wobei die bedruckte Folie ohne nachträgliches Aufbringen einer Klebstoff-, Haft- oder Siegelschicht unmittelbar mit einem Substrat unter Bildung eines dekorativen Profilkörpers verschweißt wird.

Die Folie lässt sich besonders bevorzugt aus thermoplastischem Kunststoff im Wege der Extrusion herstellen. Das Substrat, z. B. eine Profilleiste für die Möbelindustrie, ist aus thermoplastischem Kunststoff oder zumindest bereichsweise aus thermoplastischem Kunststoff gefertigt, so dass sich die Folie einwandfrei mit dem Substrat verschweißen lässt.

Die Erfindung geht dabei von der Erkenntnis aus, dass sich die Herstellung von dekorativen Profilkörpern optimieren lässt, wenn für die Beschichtung des Substrats (analog oder digital) bedruckte, thermoplastische Kunststofffolien verwendet werden, die nach dem Bedrucken ohne weitere Maßnahmen und insbesondere ohne Aufbringen von Klebstoffschichten, Haftschichten oder Siegelschichten unmittelbar mit dem Substrat verschweißt werden. Insbesondere wird im Rahmen der Erfindung nach dem Bedrucken der Folie auf eine weitere Bearbeitung der Folie und insbesondere auf ein Aufbringen weiterer Schichten wie z. B. Haftschichten, Klebeschichten oder Heißsiegelschichten verzichtet. Die bedruckte Folie lässt sich unmittelbar verarbeiten und mit dem Substrat verschweißen.

Dabei erfolgt die Verarbeitung der bedruckten Folie in-line im Zuge des Herstellungsprozesses des Substrates. So handelt es sich bei dem Substrat um ein Substrat, das im Wege der Kunststoff-Extrusion hergestellt wird, z. B. um eine extrudierte Profilleiste bzw. Kantenleiste für die Möbelindustrie. Dabei wird die Folie im Zuge der Extrusion in-line in noch heißem Zustand und folglich im noch nicht erstarrten Zustand des Substrates mit dem Substrat verschweißt, und zwar besonders bevorzugt ohne weitere Zuführung von Wärme. Dabei lässt sich die Verarbeitungswärme des Extrusionsprozesses für die Folienverschweißung in der Extrusion ausnutzen. Es erfolgt eine Flächenverschweißung mit dem Substrat durch Druckkontakt der Folie mit der (noch) heißen Substratoberfläche. Die Verarbeitung der Folie erfolgt demnach im Zuge der Extrusion bei einer Temperatur der Oberfläche des Substrates, welche höher als der Festpunkt der Folie liegt. Es gelingt eine einwandfreie und dauerhafte Verbindung der Folie mit dem Substrat, so dass ein dekorativer Formkörper hergestellt wird, bei dem Probleme mit einer eventuellen Delamination nicht zu befürchten sind.

Bei der zu bedruckenden Folie kann es sich um eine einlagige Folie (Monofolie) handeln. Alternativ kann die Folie auch als mehrlagige Folie (Multilayerfolie) ausgebildet sein.

Besonders bevorzugt ist die zu bedruckende Folie transparent ausgebildet. Alternativ kommen jedoch auch nicht transparente Folien, z. B. durchgefärbte Folien zum Einsatz.

Die Dicke der Folie kann im Bereich von 20 µm bis 900 µm, vorzugsweise 30 µm bis 500 µm liegen.

Die erfindungsgemäße Folie kann bevorzugt aus einem thermoplastischen Elastomer (TPE) hergestellt sein. Es können z. B. Polymere und bevorzugt thermoplastische Elastomere auf Olefinbasis zum Einsatz kommen (PP, PE, TPO). Alternativ können thermoplastische Elastomere aus der Gruppe der Styrol-Blockcopolymere (TPE-S bzw. TPS) zum Einsatz kommen, z. B. aus der Gruppe der SBS, SEBS, SEPS oder SEEPS. Ferner können thermoplastische Elastomere auf Urethanbasis (TPS-U bzw. TPU) verwendet werden. Die Polymere können erfindungsgemäß auch durch Säure-Endgruppen, Maleinsäureanhydrid oder andere funktionelle Gruppen funktionalisiert sein, da dadurch die Bedruckbarkeit und auch die Haftung verbessert wird.

Die Folie kann auch z.B. auf Basis eines Polyacrylates, eines Polymethylmetacrylates (PMMA) oder eines Alcylmetacrylat-Alcylacrylat-Copolymers oder Methylmethacrylat-Butylacrylat-Copolymers gefertigt sein. Alternativ kommt auch eine Fertigung auf Basis von Styrol-Acrylnitril (SAN), Methylmetacrylat-Acrylnitril-Butadien-Styrol (MABS), Acrylnytryl-Butadien-Styrol-Copolymerisat (ABS) oder Polyvinylchlorid (PVC) in Frage.
Es können auch Blends aus den genannten Polymeren verwendet werden.

Die Folie kann z. B. durch Extrusion hergestellt werden. Im Zuge der Herstellung der Folie kann in üblicher Weise eine Additivierung, z. B. mit Verarbeitungsadditiven vorgesehen sein. Als Additive kommen z. B. Wachse, organische oder anorganische Füllstoffe, endotherme oder exotherme Treibmittel, Trennmittel, Silikone, innere und/oder äußere Gleitmittel, Wärme- und Lichtstabilisatoren, Pigmente, Farbstoffe, Harze, IR-Absorber, NIR-Absorber, Silikate, Silane, Verträglichkeitsvermittler, MAH-modifizierte Polymere auf PP- oder PE-Basis als Kopplungsadditive, Carbonfasern, Ferrite, Metallpulver, Glasfasern, Glaskugeln usw. zum Einsatz.

Die Folie besteht bevorzugt aus Polymeren oder Polymerlegierungen mit polaren und/oder unpolaren Gruppen bzw. mit gemischt polaren und/oder unpolaren Eigenschaften. Sie lässt sich mit polaren oder unpolaren Substraten verschweißen.

Die Bedruckung kann mit üblichen Druckverfahren, z. B. analogen Druckverfahren oder Digitaldruckverfahren erfolgen. Dabei kann eine Oberflächenstrukturierung der bedruckten Folie gleichzeitig beim Verschweißen der Folie auf dem Substrat mittels entsprechend ausgeformter Andruckelemente erfolgen. Alternativ kann die Folie bereits eine Struktur vor dem Bedrucken aufweisen bzw. eine Oberflächenstruktur wird mittels Strukturlack erzeugt. Die Folie kann transparent oder auch durchgefärbt sein. Außerdem kann die Folie mit einer kratzfesten Lackierung auf der Oberseite versehen sein. Schließlich besteht die Möglichkeit, dass die Folie auf mindestens einer Seite mittels einer physikalischen oder chemischen Vorbehandlung oberflächenaktiviert ist, z. B. durch Corona-Behandlung, Plasma-Behandlung oder eine Flamm-Behandlung.

Die beschriebene Folie wird mit den beschriebenen Vorgaben bevorzugt auf Kantenleisten für die Möbelindustrie aufgebracht. Sie kann jedoch in der beschriebenen Weise auch auf anderen Formteilen oder Substraten (Profilen, Folien oder Platten) angeordnet werden.

Die erfindungsgemäßen Folien können auf polaren und/oder unpolaren Substraten, z. B. Kantenflächen, befestigt werden, z. B. auf Formteilen/Substraten aus ABS, PVC, PMMA oder PP.

Im Folgenden wird die Erfindung anhand von lediglich Ausführungsbeispiele darstellenden Zeichnungen näher erläutert. Es zeigen
- Fig. 1: schematisch vereinfacht ein Verfahren zum Herstellen eines dekorativen Profilkörpers,
- Fig. 2a bis 2e: schematisch vereinfacht erfindungsgemäße Folien für die Herstellung dekorativer Profilkörper.

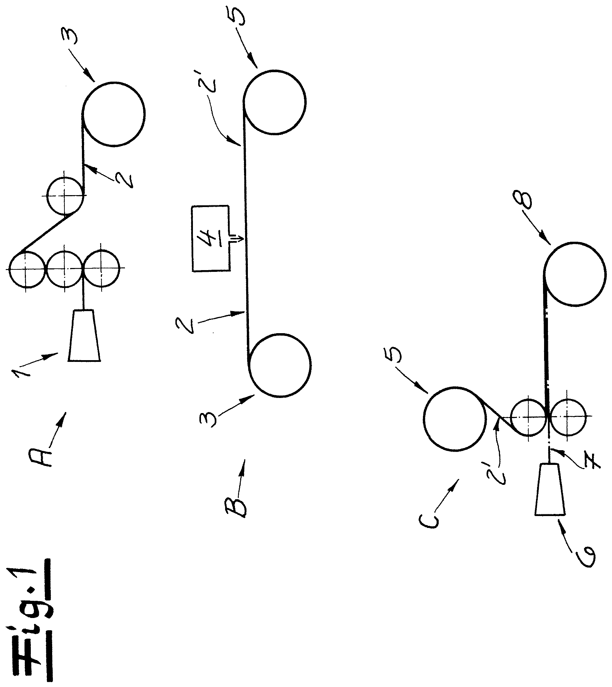

Das erfindungsgemäße Verfahren zur Herstellung eines dekorativen Profilkörpers, insbesondere einer Kantenleiste für die Möbelindustrie, soll beispielhaft anhand der schematischen Darstellung in Fig. 1 erläutert werden.

Ausgangspunkt bildet eine Folie aus thermoplastischem Kunststoff, die z. B. im Wege der Extrusion hergestellt wird. In Fig. 1 oben ist die Extrusionsvorrichtung 1 für die Herstellung der Folie 2 dargestellt, die auf einer Folienrolle 3 zur Verfügung gestellt wird (Verfahrensschritt A).

Anschließend erfolgt im Verfahrensschritt B das Bedrucken dieser Folie 2. Dazu wird die Folie 2 von der Folienrolle 3 abgewickelt und mittels herkömmlicher Druckverfahren, z. B. Digitaldruckverfahren oder Analog-Druckverfahren bedruckt. Die Druckvorrichtung 4 ist in der Figur angedeutet. Die bedruckte Folie 2' wird wiederum auf einer Folienrolle 5 aufgewickelt.

Die Weiterverarbeitung dieser bedruckten Folie ist dann in Fig. 1 im Verfahrensschritt C gezeigt.

Dabei wird die bedruckte Folie 2' im Zuge der Herstellung des Substrates, nämlich im Zuge der Extrusion des Substrates, z. B. des Kantenbandes mit dem Substrat verschweißt. Dazu ist in Fig. 1 die Extrusionsvorrichtung 6 für die Herstellung des Substrates, z. B. Kantenbandes 7 angedeutet. Die bedruckte Folie 2' wird von der Folienrolle 5 abgewickelt und in-line im Zuge der Extrusion des Substrates im noch heißen Zustand des Substrates ohne weitere Zuführung von Wärme mit dem Substrat 7 verschweißt. Der mit der bedruckten Folie 2' beschichtete Formkörper (z. B. das Kantenband) kann wiederum zu einer Rolle 8 aufgerollt werden.

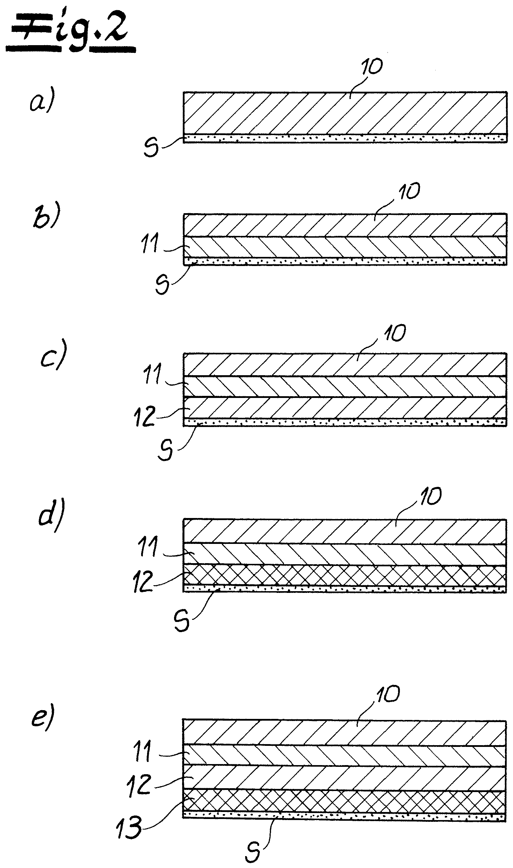

Die Folie 2 kann gemäß Fig. 2a bis 2e in unterschiedlichen Ausführungsformen als Monofolie oder als mehrlagige Folie (Multilayer) ausgebildet sein. Die Fig. 2a bis 2e zeigen unterschiedliche Ausführungsformen.

Fig. 2a zeigt eine Ausführungsform als Monofolie, bei der die Folie aus einer Schicht 10 aus einem ersten Polymer besteht. Die der zu verschweißenden Oberfläche gegenüberliegende Rückseite der Folie kann mit einer Schutzfolie S versehen sein.

Fig. 2b zeigt eine zweischichtige Folie mit einer ersten Schicht 10 aus einem ersten Polymer und einer zweiten Schicht 11 aus einem zweiten Polymer oder einem Gewebe, Papier, Faser oder dergleichen. Unterseitig kann wiederum eine Schutzfolie S vorgesehen sein.

Fig. 2c zeigt eine dreischichtige bzw. dreilagige Folie mit einer ersten Schicht 10 aus einem ersten Polymer, einer zweiten Schicht 11 aus einem zweiten Polymer, Gewebe, Papier, Faser oder dergleichen und einer dritten Schicht 12, die wiederum aus dem ersten Polymer gefertigt sein kann. Darunter kann wiederum eine Schutzfolie S vorgesehen sein.

Fig. 2d zeigt eine vierte Ausführungsform mit einer ersten Schicht 10 aus einem ersten Polymer, einer zweiten Schicht 11 aus einem zweiten Polymer und einer dritten Schicht 12 aus einem dritten Polymer sowie unterseitig wiederum gegebenenfalls eine Schutzfolie S.

Fig. 2e zeigt eine fünfte Ausführungsform mit einer ersten Schicht 10 aus einem ersten Polymer, einer zweiten Schicht 11 aus einem zweiten Polymer, einer dritten Schicht 12 aus dem ersten Polymer und einer vierten Schicht 13 aus einem dritten Polymer sowie gegebenenfalls unterseitig einer Schutzfolie S.

Hierbei kann die innenliegende (eingebettete) Polymerfolienschicht als Haftvermittler zwischen zwei unverträglichen Polymerfolienschichten eingesetzt werden oder auch z. B. höhere Steifigkeit, höhere Wärmebeständigkeit besitzen oder aus Kostengründen eingesetzt werden.

Für die eingesetzte Folie können folgende Ausführungsbespiele angegeben werden:

### Ausführungsbeispiel 1:

Monofolie bestehend aus Alcylmetacrylat-Alcylacrylat-Copolymer mit einer Folienstärke von 200 µm in Shore D = 46 und einer coextrudierten PE-Schutzfolie in einer Folienstärke von 30 µm.

### Ausführungsbeispiel 2:

Monofolie bestehend aus einem Alcylmetacrylat-Alcylacrylat-Copolymer (TPE) Blend mit 30 % PMMA, in einer Folienstärke von 50 µm in Shore D = 70 und einer coextrudierten PE-Schutzfolie in einer Folienstärke von 30 µm.

### Ausführungsbeispiel 3:

Mehrschichtfolie bestehend aus einer Alcylmetacrylat-Alcylacrylat-Copolymer (TPE) Schicht mit einer Folienstärke von 100 µm in Shore D = 45 und einer zweiten coextrudierten Folienschicht aus PP-g-MAH in 100 µm und einer aufkaschierten PE-Schutzfolie in einer Folienstärke von 20 µm.

### Ausführungsbeispiel 4:

Mehrschichtfolie bestehend aus einer Alcylmetacrylat-Alcylacrylat-Copolymer (TPE) Schicht mit einer Folienstärke von 400 µm in Shore D = 45 und einer zweiten coextrudierten Folienschicht aus SEPS in 100 µm ohne Schutzfolie.

### Ausführungsbeispiel 5:

Mehrschichtfolie bestehend aus einem Alcylmetacrylat-Alcylacrylat-Copolymer (TPE) in einer Stärke von 50 µm in Shore D = 46 und einer coextrudierten PMMA-Schicht in einer Folienstärke von 40 µm mit coextrudierter Schutzfolie aus PE in 30 µm Stärke.

### Ausführungsbeispiel 6:

Mehrschichtfolie bestehend aus einer SEPS (TPE) Schicht mit einer Folienstärke von 30 µm in Shore D = 60 und einer zweiten coextrudierten Folienschicht aus PP in 100 µm ohne Schutzfolie.

### Ausführungsbeispiel 7:

Monofolie bestehend aus Alcylmetacrylat-Alcylacrylat-Copolymer, PE-MAH-Wachs, mineralischen Füllstoffen, Pigmenten und Laser NIR-Absorber in einer Folienstärke von 200 µm in Shore D = <46.

## Patentansprüche

1. Verfahren zur Herstellung eines dekorativen Profilkörpers, insbesondere einer Kantenleiste für die Schmalflächenbeschichtung von Möbelplatten,
wobei eine Folie (2) aus thermoplastischem Kunststoff hergestellt wird,
wobei die Folie mit einem Dekor bedruckt wird und/oder bedruckt ist,
wobei ein Substrat (7) aus thermoplastischem Kunststoff durch Extrusion hergestellt wird, **dadurch gekennzeichnet,**
**dass** die bedruckte Folie (2') ohne nachträgliches Aufbringen einer Klebstoff-, Haft- oder Siegelschicht unmittelbar mit dem Substrat (7) unter Bildung des dekorativen Profilkörpers verschweißt wird, indem
die Folie (2') im Zuge der Extrusion in-line in noch heißem Zustand des Substrats (7) mit dem Substrat (7) verschweißt wird.

2. Verfahren nach Anspruch 1, **dadurch gekennzeichnet, dass** die Folie (2') ohne weitere Zuführung von Wärme mit dem Substrat (7) verschweißt wird.

3. Verfahren nach Anspruch 1 oder 2, **dadurch gekennzeichnet, dass** die zu bedruckende Folie (2) als einlagige Folie ausgebildet ist.

4. Verfahren nach einem der Ansprüche 1 bis 3, **dadurch gekennzeichnet, dass** die zu bedruckende Folie (2) als mehrlagige Folie ausgebildet ist.

5. Verfahren nach einem der Ansprüche 1 bis 4, **dadurch gekennzeichnet, dass** die zu bedruckende Folie (2) transparent oder durchgefärbt ist.

6. Verfahren nach einem der Ansprüche 1 bis 5, **dadurch gekennzeichnet, dass** die Folie (2) auf der der für den Druck vorgesehenen Frontseite gegenüberliegenden Rückseite mit einer Schutzfolie (S) versehen ist.

7. Verfahren nach einem der Ansprüche 1 bis 6, **dadurch gekennzeichnet, dass** die zu bedruckende Folie (2) eine Dicke von 20 µm bis 900 µm, vorzugsweise 30 µm bis 500 µm aufweist.

8. Verfahren nach einem der Ansprüche 1 bis 7, **dadurch gekennzeichnet, dass** die Folie (2) auf Basis eines thermoplastischen Elastomers (TPE) hergestellt wird.

9. Verfahren nach Anspruch 8, **dadurch gekennzeichnet, dass** die Folie (2) aus einem Styrol-Blockcopolymer (TPE-S bzs. TPS) besteht, bevorzugt aus der Gruppe SBS, SEBS, SEPS, SEEPS.

10. Verfahren nach einem der Ansprüche 1 bis 9, **dadurch gekennzeichnet, dass** die Folie (2) auf Olefinbasis oder einem thermoplastischen Elastomer auf Olefinbasis hergestellt ist, z. B. aus PP, PE, TPE-O bzw. TPO, oder auf Urethanbasis, z. B. aus TPE-U bzw. TPU.

11. Verfahren nach einem der Ansprüche 1 bis 9, **dadurch gekennzeichnet, dass** die Folie (2) auf Basis eines Polyacrylates, Polymethylmetacrylates (PMMA) oder eines Alcylmetacrylat-Alcylacrylat-Copolymers oder eines Methylmetacrylat-Butylacrylat-Copolymers oder auf Basis eines Acrylnitril-Butadien-Styrol-Copolymers (ABS) oder Polyvinylchlorids (PVC) hergestellt ist.

12. Verfahren nach einem der Ansprüche 1 bis 11, **dadurch gekennzeichnet, dass** die Folie (2) mit Additiven additiviert ist, z. B. mit zumindest einem oder mehreren Wachsen, Füllstoffen, Treibmitteln, Trennmitteln, Silikonen, Gleitmitteln, Wärme- und Lichtstabilisatoren, Pigmenten, IR- oder NIR-Absorbern, Silikaten, Silanen, Verträglichkeitsvermittlern, Kopplungsadditiven, Carbonfasern, Ferriten, Metallpulver, Glasfasern, Glaskugeln, Farbstoffen und/oder Harzen.

13. Verfahren nach einem der Ansprüche 1 bis 12, **dadurch gekennzeichnet, dass** die Folie (2) mit einer Oberflächenstruktur, z. B. einer Prägung versehen ist.

14. Verfahren nach einem der Ansprüche 1 bis 13, **dadurch gekennzeichnet, dass** die Folie (2) mit einer kratzfesten Lackierung auf der Oberseite versehen ist.

15. Verfahren nach einem der Ansprüche 1 bis 14, **dadurch gekennzeichnet, dass** die Folie (2) auf mindestens einer Seite mittels einer physikalischen und/oder chemischen Vorbehandlung oberflächenaktiviert ist, z. B. durch Corona-Behandlung, Plasma-Behandlung oder Flamm-Behandlung.

## Claims

1. A method for producing a decorative profiled element, in particular an edge strip for coating the narrow faces of furniture panels,
wherein a film (2) of thermoplastic material is produced,
wherein the film will be printed and/or is printed with a decorative pattern,
wherein a substrate (7) of thermoplastic material is produced by extrusion, **characterized in that**
the printed film (2') is welded directly to the substrate (7) without subsequent application of an adhesive, bonding or sealing layer, forming the decorative profiled element, by
welding the film (2') in the course of the extrusion in-line to the substrate (7) while the substrate (7) is still in the hot state.

2. The method according to claim 1, **characterized in that** the film (2')is welded to the substrate (7) without further supply of heat.

3. The method according to claim 1 or 2, **characterized in that** the film (2) to be printed is formed as a single-layer film.

4. The method according to any one of claims 1 to 3, **characterized in that** the film (2) to be printed is formed as a multi-layer film.

5. The method according to any one of claims 1 to 4, **characterized in that** the film (2) to be printed is transparent or solid-colored.

6. The method according to any one of claims 1 to 5, **characterized in that** the film (2) is provided with a protective film (S) on the rear side opposite the front side provided for printing.

7. The method according to any one of claims 1 to 6, **characterized in that** the film (2) to be printed has a thickness of 20 µm to 900 µm, preferably 30 µm to 500 µm.

8. The method according to any one of claims 1 to 7, **characterized in that** the film (2) is produced on the basis of a thermoplastic elastomer (TPE).

9. The method according to claim 8, **characterized in that** the film (2) consists of a styrene block copolymer (TPE-S or TPS), preferably from the group SBS, SEBS, SEPS, SEEPS.

10. The method according to any one of claims 1 to 9, **characterized in that** the film (2) is produced based on olefin or from an olefin-based thermoplastic elastomer, e.g. from PP, PE, TPE-0 or TPO, or based on urethane, e.g. from TPE-U or TPU.

11. The method according to any one of claims 1 to 9, **characterized in that** the film (2) is produced on the basis of a polyacrylate, polymethyl methacrylate (PMMA) or an alkyl metacrylate-alkyl acrylate copolymer or a methyl metacrylate-butyl acrylate copolymer or on the basis of an acrylonitrile-butadiene styrene copolymer (ABS) or polyvinyl chloride (PVC).

12. The method according to any one of claims 1 to 11, **characterized in that** the film (2) is additivated with additives, for example with at least one or more waxes, fillers, blowing agents, abherents, silicones, lubricants, heat and light stabilizers, pigments, IR or NIR absorbers, silicates, silanes, compatibilizers, coupling additives, carbon fibers, ferrites, metal powders, glass fibers, glass beads, dyes and/or resins.

13. The method according to any one of claims 1 to 12, **characterized in that** the film (2) is provided with a surface structure, e.g. an embossing.

14. The method according to any one of claims 1 to 13, **characterized in that** the film (2) is provided with a scratch-resistant lacquer coating on the upper side.

15. The method according to any one of claims 1 to 14, **characterized in that** the film (2) is surface-activated on at least one side by means of a physical and/or chemical pretreatment, e.g. by corona treatment, plasma treatment or flame treatment.

## Revendications

1. Procédé de fabrication d'un corps profilé décoratif, en particulier d'une baguette de chant pour le revêtement sur surfaces étroites de plaques de meubles, dans lequel
un film (2) en matière thermoplastique est fabriqué,
le film est imprimé avec un décor et/ou imprimé,
un substrat (7) en matière thermoplastique est fabriqué par extrusion, **caractérisé en ce que**
le film imprimé (2') est soudé sans application ultérieure d'une couche collante, adhésive ou d'une couche de scellement directement avec le substrat (7) en formant un corps profilé décoratif,
par le fait que le film (2') est soudé au substrat (7) à la suite de l'extrusion dans un état encore chaud du substrat (7) .

2. Procédé selon la revendication 1, **caractérisé en ce que** le film (2') est soudé au substrat (7) sans autre apport de chaleur.

3. Procédé selon la revendication 1 ou 2, **caractérisé en ce que** le film à imprimer (2) est réalisé sous forme d'un film à une épaisseur.

4. Procédé selon une des revendications 1 à 3, **caractérisé en ce que** le film à imprimer (2) est réalisé sous forme d'un film à épaisseurs multiples.

5. Procédé selon une des revendications 1 à 4, **caractérisé en ce que** le film à imprimer (2) est transparent ou teint dans la masse.

6. Procédé selon une des revendications 1 à 5, **caractérisé en ce que** le film (2) est pourvu d'un film protecteur (S) sur sa face arrière opposée à la face avant prévue pour l'impression.

7. Procédé selon une des revendications 1 à 6, **caractérisé en ce que** le film à imprimer (2) présente une épaisseur de 20 µm à 900 µm, de préférence 30 µm à 500 µm.

8. Procédé selon une des revendications 1 à 7, **caractérisé en ce que** le film (2) est fabriqué à base d'un élastomère thermoplastique (TPE).

9. Procédé selon la revendication 8, **caractérisé en ce que** le film (2) est composé d'un copolymère bloc de styrène (TPE-S ou TPS), de préférence du groupe SBS, SEBS, SEPS, SEEPS.

10. Procédé selon une des revendications 1 à 9, **caractérisé en ce que** le film (2) est fabriqué à base d'oléfine ou d'un élastomère thermoplastique à base d'oléfine, par exemple à partir de PP, PE, TPE-O ou TPO, ou à base d'uréthane, par exemple à partir de TPE-U ou TPU.

11. Procédé selon une des revendications 1 à 9, **caractérisé en ce que** film (2) est fabriqué à base de polyacrylate, de polyméthylméthacrylate (PMMA) ou d'un autre copolymère d'alcylmétacrylate-alcylacrylate ou d'un copolymère de méthylmétacrylate-butylacrylate ou à base d'un copolymère d'acrylnitril-butadiène-styrène (ABS) ou d'un chlorure de polyvinyle (PVC).

12. Procédé selon une des revendications 1 à 11, **caractérisé en ce que** le film (2) est pourvu d'additifs, par exemple d'un ou plusieurs éléments parmi les cires, agents de charge, carburants, silicones, lubrifiants, stabilisateurs de chaleur et de lumière, pigments, absorbeurs d'IR ou NIR, silicates, silanes, agents de tolérance, additifs de couplage, fibres de carbone, ferrites, poudres métalliques, fibres de verre, billes en verre, colorants et/ou résines.

13. Procédé selon une des revendications 1 à 12, **caractérisé en ce que** le film (2) est pourvu d'une structure de surface, par exemple un gaufrage.

14. Procédé selon une des revendications 1 à 13, **caractérisé en ce que** le film (2) est pourvu d'un vernis anti-rayures sur sa face supérieure.

15. Procédé selon une des revendications 1 à 14, **caractérisé en ce que** le film (2) est activé en surface sur au moins une face au moyen d'un traitement préalable physique et/ou chimique, par exemple par traitement au corona, traitement au plasma ou traitement à la flamme.
